(19) Europäisches Patentamt
European Patent Office
Office européen des brevets

(11) **EP 2 812 667 B1**

(12) **EUROPÄISCHE PATENTSCHRIFT**

(45) Veröffentlichungstag und Bekanntmachung des Hinweises auf die Patenterteilung:
**29.04.2020 Patentblatt 2020/18**

(21) Anmeldenummer: **13710971.6**

(22) Anmeldetag: **06.02.2013**

(51) Int Cl.:
**G01M 11/08** (2006.01)          **G01L 1/24** (2006.01)
**G01D 5/353** (2006.01)

(86) Internationale Anmeldenummer:
**PCT/EP2013/000351**

(87) Internationale Veröffentlichungsnummer:
**WO 2013/117326 (15.08.2013 Gazette 2013/33)**

(54) **MESSANORDNUNG UND VERFAHREN ZUR ERFASSUNG DER KRAFTBEANSPRUCHUNG BEI EINEM BIEGEWEICHEN OBJEKT**

MEASURING ARRANGEMENT AND METHOD FOR CAPTURING THE STRESS IN A FLEXIBLE OBJECT

DISPOSITIF DE MESURE ET PROCÉDÉ POUR DÉTECTER LA SOLLICITATION DE FORCE D'UN OBJET SOUPLE EN FLEXION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.02.2012 DE 102012002408**

(43) Veröffentlichungstag der Anmeldung:
**17.12.2014 Patentblatt 2014/51**

(73) Patentinhaber: **Hochschule Düsseldorf**
**40476 Düsseldorf (DE)**

(72) Erfinder:
• **JAHR, Andreas**
**41462 Neuss (DE)**
• **TROFIMOV, Igor**
**40764 Langenfeld (DE)**
• **HANSEN, Andreas**
**40223 Düsseldorf (DE)**

(74) Vertreter: **Cohausz Hannig Borkowski Wißgott**
**Patentanwaltskanzlei GbR**
**Schumannstraße 97-99**
**40237 Düsseldorf (DE)**

(56) Entgegenhaltungen:
**WO-A1-2013/054733          FR-A1- 2 962 217**
**JP-A- 2010 112 867          US-A1- 2003 194 167**
**US-A1- 2010 326 200**

EP 2 812 667 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

Die vorliegende Erfindung betrifft eine Messanordnung zur Erfassung der lokalen Kraftbeanspruchung eines biegeweichen Objektes, umfassend eine spektral breitbandige Lichtquelle zur Emittierung spektral breitbandigen Lichts, einen ersten Faser-Bragg-Gitter (FBG)-Sensor, dem das breitbandige Licht zugeführt ist und der daraus Licht einer bestimmten Wellenlänge reflektiert, bei der das Reflexionsspektrum des ersten FBG-Sensors ein Maximum besitzt, einen ersten optischen Splitter, der zwischen der Lichtquelle und dem ersten FBG-Sensor angeordnet ist und der das von dem ersten FBG-Sensor reflektierte Licht auskoppelt, einen zweiten Faser-Bragg-Gitter (FBG)-Sensor dem das von dem ersten FBG-Sensor reflektierte Licht zugeführt ist und der Licht einer bestimmten Wellenlänge reflektiert, bei der das Reflexionsspektrum des zweiten FBG-Sensors ein Maximum besitzt, einen zweiten optischen Splitter der zwischen dem ersten optischen Splitter und dem zweiten FBG-Sensor angeordnet ist und das von dem zweiten FBG-Sensor reflektierte Licht auskoppelt, sowie weiterhin umfassend einen lichtempfindlichen Sensor und eine mit diesem verbundene Auswerteeinheit, wobei das von dem zweiten FBG-Sensor reflektierte Licht auf den lichtempfindlichen Sensor geleitet ist und die Auswerteeinheit dazu eingerichtet ist, aus dem Sensorsignal des lichtempfindlichen Sensors die Kraftbeanspruchung des Objekts zu ermitteln. Des Weiteren betrifft die Erfindung ein Verfahren zur Erfassung der lokalen Dehnung eines Objektes unter Verwendung der erfindungsgemäßen Messanordnung.

Eine Messanordnung der vorgenannten Gattung ist aus dem US-Patent US 6,829,397 B2 bekannt. Eine ähnliche Messanordnung zeigt die US-Patentanmeldung 2010/0326200 A1. Bei dieser werden so genannte Faser Bragg Gitter (englisch: Fiber Bragg Gratings, abgekürzt FBG) als Dehnungssensoren verwendet. Bei einem derartigen FBG-Sensor handelt es sich um eine optische Faser, die Licht einer bestimmten Wellenlänge reflektiert und das übrige, eingestrahlte Licht transmittiert. Dies wird dadurch erreicht, dass im lichtführenden Kern der Faser eine periodische Variation der Brechzahl eingebracht wird. Entlang der Faser wechselt dann die Brechzahl periodisch zwischen der normalen Brechzahl des Faserkerns und der geänderten Brechzahl, wobei die Abstände von einem Bereich mit geänderter Brechzahl zum nächstfolgenden Bereich mit geänderter Brechzahl gleich sind. Die Bereiche mit geänderter Brechzahl bilden Gitterlinien des in die Faser eingebrachten Bragg Gitters. Hierdurch wird ein wellenlängenspezifischer, dielektrischer Spiegel gebildet, der aus dem Spektrum eines breitbandig eingestrahlten Lichts Licht derjenigen Wellenlänge am stärksten zurück reflektiert (Peak-Wellenlänge), die mit dem Abstand der in ihrer Brechzahl geänderten Bereiche der Faser korrespondiert. Grundsätzlich wird auch licht mit einer geringfügig höheren und geringeren Wellenlänge, beispielsweise plus/minus wenige Prozent der Peak-Wellenlänge reflektiert; dies jedoch mit deutlich geringerer optischer Leistung.

Andere optische Messanordnungen, die Bragg-Gitter verwenden sind in der französischen Patentanmeldung FR 2962217 A1 und in der japanischen Patentanmeldung JP 2010112867 A beschrieben.

Bragg-Gitter reflektieren Wellenlängen mit sehr kleiner Bandbreite (sogenannte Peaks im Spektrum). Das Gitter besteht nicht nur aus einigen wenigen Gitterlinien, sondern aus einigen Tausend, die über einer Länge der Glasfaser von 2mm bis 20mm in dieser eingebracht sind. Jede einzelne Gitterlinie reflektiert einen sehr kleinen Anteil des eingehenden Lichtes. Der Reflexionsgrad pro Gitterlinie liegt im Bereich von nur 0,001 % ... 0,1 %, abhängig von der Menge an Energie, die aufgewendet wurde, um das Bragg-Gitter einzubrennen und vom prozentualen Anteil der Germanium-Dotierung des Faserkerns. Da jede einzelne Gitterlinie Licht mit unterschiedlicher Phasenverschiebung reflektiert, kommt es zu Interferenzen und einer Auslöschung des größten Teils des Lichtes. Die Reflexionen mit gleicher Phasenverschiebung akkumulieren zu einem starken Reflexions-Peak. Die Reflexion des Gesamtgitters ist die Summe dieser mehreren tausend kleinen Einzelreflexionen, so dass das Reflexionsspektrum eines Faser Bragg Gratings einer sehr schmalen Glockenkurve entspricht. Ein solches Faser Bragg Grating kann dadurch auch als optischer "Inline-Filter" zur Filterung bestimmter Wellenlängen oder als wellenlängenspezifischer Reflektor betrachtet werden.

Derartige Faser Bragg Gratings können wie in dem US-Patent 6,829,397 B2 als Sensoren verwendet werden, da eine Dehnung oder eine Stauchung, beispielsweise in Folge einer Temperaturänderung und/oder aufgrund äußerer Krafteinwirkung, die Abstände der Bereiche in der Faser mit geänderter Brechzahl verändern. Es ist daher bekannt, diese so genannten FGB-Sensoren zur Temperatur oder Dehnungsmessung einzusetzen.

In Flugzeugen und Windkraftanlagen werden FBG-Sensoren in die Verbundwerkstoffe eingearbeitet, um durch eine Spannungsanalyse die Belastung der Flügel zu überwachen. FBG-Sensoren bieten im Gegensatz zu den klassischen resistiven Dehnungsmessstreifen einige Vorteile. Sie können durch die geringen optischen Verluste für sehr große Leitungslängen eingesetzt werden, beispielsweise bei der Überwachung von Hochspannungsleitungen oder Pipelines. Darüber hinaus sind FBG-Sensoren unempfindlich gegen elektromagnetische Felder und können in explosionsgefährdeten Bereichen verwendet werden.

Die Temperaturempfindlichkeit ist jedoch ein erheblicher Nachteil bei Dehnungsmessungen mittels FBG-Sensoren. Aus diesem Grunde schlägt das US-Patent 6,829,397 B2 vor, zwei, nahezu identische, FBG-Sensoren zu verwenden, von denen der erste Sensor zur Dehnungsmessung fest mit dem zu vermessenden Objekt verbunden ist, wohingegen der zweite FBG-Sensor lediglich der Temperaturkompensation dient und daher keine Kraft aufnimmt. Er ist jedoch neben dem ersten FBG-Sensor angeordnet, damit dieselbe Temperatur auf beide FBG-Sensoren gleichzeitig wirkt.

Das von dem ersten FBG-Sensor reflektierte Licht wird dem zweiten FBG-Sensor zugeführt. Die Wellenlänge von dem ersten FBG-Sensor reflektierten Lichts ist von der auf ihn einwirkenden mechanischen Kraft sowie von seiner Umgebungstemperatur abhängig, wobei die Umgebungstemperatur unabhängig von dem Einwirken einer mechanischen Kraft zu einer Wellenlängenverschiebung führt. Da die Umgebungstemperatur bei dem zweiten FBG-Sensor denselben Wellenlängenverschiebungseffekt bewirkt, wird der Einfluss der Temperatur auf die Messung kompensiert. Dies wird nachfolgend deutlich.

Im kraftneutralen Zustand des ersten FBG-Sensors ist dessen Reflexionsspektrum im Wesentlichen gleich dem Spektrum des zweiten FBG-Sensors, so dass die optische Leistung des von dem zweiten FBG-Sensor reflektierten Lichts maximal ist. Wirkt nunmehr eine Kraft auf den ersten FBG-Sensor, verschiebt sich die Wellenlänge des von diesem reflektierten Lichts, wobei die Wellenlänge bei einer Stauchung des ersten FBG-Sensors kleiner wird und bei einer Dehnung des Sensors größer wird. Die Verschiebung der Wellenlänge des von dem ersten FBG-Sensors reflektierten Lichts bedeutet konkret, dass sich sein Reflexionsspektrum relativ zu dem Reflexionsspektrum des zweiten FBG-Sensors derart verschiebt, dass sich die beiden Spektren nunmehr nur noch teilweise überlagern, so dass die Intensität des von dem zweiten FBG-Sensors reflektierten Lichts geringer wird. Die Schnittfläche der Reflexionsspektren wird umso geringer wird, je weiter die Wellenlänge verschoben wird.

Ein Nachteil dieser aus US 6,829,397 B2 bekannten Anordnung besteht darin, dass anhand der detektierten Lichtleistung des von dem zweiten FBG-Sensors reflektierten Lichts nicht festgestellt werden kann, ob der erste FBG-Sensor einer Dehnung oder Streckung ausgesetzt ist.

Es ist daher Aufgabe der vorliegenden Erfindung, eine verbesserte Messanordnung mit Faser Bragg Grating (FBG) Sensoren vorzuschlagen, die eine Messung der lokalen Dehnung eines Objektes in beide Richtungen ermöglicht und dabei zwischen einer lokalen Streckung und Stauchung des Objektes unterscheiden kann. Des Weiteren ist es Aufgabe der vorliegenden Erfindung, ein Verfahren zur Erfassung der lokalen Dehnung eines Objektes bereit zu stellen, mittels welchem eine lokale Streckung und Stauchung des Objektes festgestellt werden kann.

Die genannte Aufgabe wird durch eine Messanordnung mit den Merkmalen des Anspruchs 1 sowie durch ein Verfahren mit den Merkmalen des Anspruchs 12 gelöst. Vorteilhafte Weiterbildungen der Erfindung sind in den jeweiligen Unteransprüchen wiedergegeben.

Erfindungsgemäß wird eine optische Meßanordnung zur Erfassung der lokalen Kraftbeanspruchung eines biegeweichen Objekts vorgeschlagen, umfassend

- eine spektral breitbandige Lichtquelle zur Emittierung spektral breitbandigen Lichts,
- einen ersten Faser-Bragg-Gitter (FBG)-Sensor, dem das spektral breitbandige Licht zugeführt ist und der daraus Licht einer bestimmten ersten Wellenlänge reflektiert, bei der das Reflexionsspektrum des ersten FBG-Sensors ein Maximum besitzt,
- einen ersten optischen Splitter, der zwischen der Lichtquelle und dem ersten FBG-Sensor angeordnet ist und der das von dem ersten FBG-Sensor reflektierte Licht auskoppelt,
- einen zweiten Faser-Bragg-Gitter (FBG)-Sensor, dem das von dem ersten FBG-Sensor reflektierte Licht zugeführt ist und der Licht einer bestimmten zweiten Wellenlänge reflektiert, bei der das Reflexionsspektrum des zweiten FBG-Sensors ein Maximum besitzt,
- einen zweiten optischen Splitter, der zwischen dem ersten Splitter und dem zweiten FBG-Sensor angeordnet ist und der das von dem zweiten FBG-Sensor reflektierte Licht auskoppelt,
- einen lichtempfindlichen Sensor und eine mit diesem verbundene Auswerteeinheit, wobei das von dem zweiten FBG-Sensor reflektierte Licht auf den lichtempfindlichen Sensor geleitet ist und die Auswerteeinheit dazu eingerichtet ist, aus dem Sensorsignal des lichtempfindlichen Sensors die Kraftbeanspruchung des Objekts zu ermitteln,

wobei der erste FBG-Sensor und der zweite FBG-Sensor fest mit dem Objekt derart verbunden sind, dass sich die Kraftbeanspruchung des Objekts auf beide FBG-Sensoren überträgt, wobei die erste und die zweite Wellenlänge derart unterscheiden, dass sich die Reflexionsspektren des ersten und des zweiten FBG-Sensors im kraftunbeanspruchten Zustand des Objekts nur teilweise überlappen, und wobei die beiden FBG-Sensoren derart an oder in dem Objekt angeordnet sind, dass sie entgegengesetzt wirkende Kräfte aufnehmen.

Des Weiteren wird ein Verfahren zur Erfassung der lokalen Kraftbeanspruchung eines biegeweichen Objekts vorgeschlagen, bei dem eine Lichtquelle ein spektral breitbandiges Lichts emittiert, das zu einem ersten Faser-Bragg-Gitter (FBG)-Sensor geführt ist, der daraus Licht einer bestimmten ersten Wellenlänge reflektiert, bei der das Reflexionsspektrum des ersten FBG-Sensors ein Maximum besitzt, wobei das von dem ersten FBG-Sensor reflektierte Licht von einem ersten optischen Splitter, der zwischen der Lichtquelle und dem ersten FBG-Sensor angeordnet ist, ausgekoppelt und einem zweiten Faser-Bragg-Gitter (FBG)-Sensor zugeführt wird, der Licht einer bestimmten zweiten Wellenlänge reflektiert, bei der das Reflexionsspektrum des zweiten FBG-Sensors ein Maximum besitzt, wobei ferner das von dem zweiten FBG-Sensor reflektierte Licht von einem zweiten optischen Splitter, der zwischen dem ersten Splitter und dem zweiten FBG-Sensor angeordnet ist, ausgekoppelt und einem lichtempfindlichen Sensor zugeführt wird, der mit einer Auswerteeinheit verbunden ist, die aus dem Sensorsignal des lichtempfindlichen Sensors die Kraftbeanspruchung des Objekts ermittelt, wobei ferner der erste FBG-Sensor und der zweite FBG-Sensor fest mit dem Objekt derart verbunden sind, dass sich die Kraftbeanspruchung des Objekts auf beide FBG-Sensoren überträgt, und sich die erste und die zweite Wellenlänge derart unterscheiden, dass sich die Reflexionsspektren des ersten und des zweiten FBG-Sensors im kraftunbeanspruchten Zustand des Objekts nur teilweise überlappen, und wobei die beiden FBG-Sensoren derart an oder in dem Objekt angeordnet sind, dass sie entgegengesetzt wirkende Kräfte aufnehmen.

Der Kerngedanke der vorliegenden Erfindung besteht darin, die optischen Ausgangssignale zweier Faser-Bragg-Gitter-Sensoren mit geringfügig zueinander versetzten Reflexionsspektren miteinander zu vergleichen, von denen ein FBG-Sensor eine lokale Dehnung des Objekts in Folge einer Krafteinwirkung, der andere FBG-Sensor eine lokale Stauchung des Objekts in Folge der Krafteinwirkung erfährt. Hierdurch lässt sich die Höhe und die Richtung der auf das Objekt einwirkenden Kraft, d.h. der in das Objekt eingeleiteten Kraft bestimmen, die sich aus der Lichtleistung des von dem zweiten FBG-Sensor reflektierten Lichts ergibt. Es kann jede Kraft gemessen werden, die nicht lediglich in axialer Richtung des Objekts wirkt, d.h. jede Kraft, die entlang der Längserstreckung des Objekts ein mechanisches Moment in dem Objekt bewirkt.

Die feste Verbindung des ersten FBG-Sensors und des zweiten FBG-Sensors mit dem Objekt bewirkt, dass sich die durch die Kraftbeanspruchung des Objekts ergebende lokale Dehnung oder Stauchung des Objekts direkt auf die FBG-Sensoren überträgt, so dass auch diese Sensoren gedehnt oder gestaucht werden, was wiederum eine Änderung des Gitterabstands des Bragg Gitters im Sensor und damit eine Verschiebung dessen Reflexionsspektrums zu Folge hat. Die mechanische Belastung des Objekts spiegelt sich damit in den Reflexionsspektren beider FBG-Sensoren wieder.

Des Weiteren ermöglicht die Verwendung von FBG-Sensoren, deren Reflexionsspektren im am oder im Objekt befestigten Zustand der Sensoren und im kraftunbeanspruchten Zustand des Objekts sich nur teilweise überlappen, dass die Richtung der auf das Objekt ausgeübten Kraft aus der Lichtleistung des von dem zweiten FBG-Sensors reflektierten Lichts bestimmt werden kann. Es kann folglich ermittelt werden, ob das Objekt auf Druck oder auf Zug belastet wird. Die teilweise Überlappung der Reflexionsspektren bedeutet, dass deren Maxima, d.h. diejenigen Wellenlängen, die mit maximaler Intensität reflektiert werden, relativ zu einander geringfügig versetzt sind.

Dies wird nachfolgend in Zusammenhang mit der notwendigen Positionierung der beiden FBG-Sensoren klar, die derart sein muss, dass sie entgegengesetzt wirkende Kräfte aufnehmen. Dies bedeutet, dass die Anordnung der Sensoren im oder am Objekt derart sein muss, dass der eine FBG-Sensor eine Dehnung erfährt während der andere eine Stauchung erfährt. Dies bewirkt, dass eine Einleitung einer Kraft in das Objekt in eine Richtung eine Verschiebung der Reflexionsspektren zu einander hin und eine Einleitung einer Kraft in das Objekt in die entgegengesetzte Richtung eine Verschiebung der Reflexionsspektren voneinander weg zur Folge hat.

Bewegen sich die Reflexionsspektren zu einander hin, erhöht sich ihr Überlappungsgrad und die Intensität des von dem zweiten FBG-Sensor reflektierten Lichts steigt. Bewegen sich die Reflexionsspektren voneinander weg, reduziert sich ihr Überlappungsgrad und die Intensität des von dem zweiten FBG-Sensor reflektierten Lichts sinkt. Im kraftunbeanspruchten Zustand des Objekts (kraftneutraler Zustand) liegt damit eine zwischen dem Maximum und dem Minimum liegende Lichtintensität des von dem zweiten FBG-Sensor reflektierten Lichts vor.

Diese kann durch entsprechende Wahl des Abstands der Peak-Wellenlängen der Reflexionsspektren auf 50% eingestellt werden.

In Abhängigkeit des Grads der Überlagerung der Spektren des ersten und des zweiten FBG-Sensors ist folglich die Intensität des von dem zweiten FBG-Sensor reflektierten Lichts höher oder geringer. Da wiederum der Grad der Überlagerung von der Kraftbeanspruchung des Objekts respektive der FBG-Sensoren abhängt, ist die Intensität des reflektierten Lichts des zweiten FBG-Sensors ein Maß für die Kraftbeanspruchung.

Die feste Verbindung des ersten FBG-Sensors und des zweiten FBG-Sensors mit dem Objekt kann dadurch erfolgen, dass die FBG-Sensoren mit dem Objekt verklebt werden bzw. verklebt sind. Dies kann ohne großen Aufwand und vor allem nachträglich an einem zu vermessenden Objekt erfolgen. Im Verklebten Zustand wird die durch die Kraftbeanspruchung des Objekts ergebende lokale Dehnung oder Stauchung des Objekts direkt auf die FBG-Sensoren übertragen. Alternativ können die FBG-Sensoren jeweils in einem Metallgehäuse untergebracht sein, dass seinerseits auf dem Objekt montiert, beispielsweise auf dieses geklebt oder geschraubt wird bzw. ist.

Gemäß einer alternativen Ausführungsvariante können der erste FBG-Sensor und der zweite FBG-Sensor direkt in dem Objekt integriert sein. Dies bedeutet, dass sie baulich und strukturell mit dem Objekt eine Einheit bilden. Dies ist insbesondere dann von Vorteil, wenn das Objekt aus einem Schichtsystem hergestellt wird, in das die Sensoren eingebracht werden können, so dass sie zwischen zwei Schichten liegen.

Das Reflexionsspektrum eines FBG-Sensors entspricht -wie bereits angesprochener vergleichsweise schmalen Glockenkurve. Ihre Taille auf Höhe der Hälfte des Intensitätsmaximums beträgt zwischen 1nm und 2nm. Um zu erreichen, dass sich die Reflexionsspektren im auf dem Objekt montierten bzw. in diesem integrierten Zustand der FBG-Sensoren im kraftneutralen Zustand des Objekts nur teilweise überlappen, können entweder FBG-Sensoren verwendet werden, deren Bragg Gitterkonstanten sich bereits herstellungsgemäß derart unterscheiden, dass die Peak-Wellenlängen zwischen 0,5nm und 2,5nm auseinander liegen. Dies bedeutet, dass die Reflexionsspektren bereits im nicht montierten bzw. nicht integrierten Zustand der FBG-Sensoren überlagernd zueinander versetzt sind, ohne dass durch Temperatur oder Krafteinwirkung die Peak-Wellenlängen einer der Sensoren gegenüber derjenigen des anderen Sensors verändert wird, d.h. eine Verstimmung der Sensoren zueinander bewirkt wird.

Alternativ können herstellungsgemäß zunächst identische, d.h. baugleiche FBG-Sensoren verwendet werden. Das bedeutet, dass die beiden FBG-Sensoren in ihrem kraftneutralen Zustand identisch sind. Eine Verschiebung der Peak-Wellenlänge respektive des Reflexionsspektrums eines der FBG-Sensoren kann nun dadurch bewirkt werden, dass einer FBG-Sensoren warmverklebt und der andere FBG-Sensor kaltverklebt wird bzw. im fertigen Bauteil verklebt ist. Durch das Warmverkleben wird der eine FBG-Sensor, beispielsweise der erste FBG-Sensor erwärmt, wodurch eine Verformung des Sensors derart bewirkt wird, dass sich die Peak-Wellenlänge verschiebt. Beim Kaltverkleben verschiebt sich die Peak-Wellenlänge dagegen nicht, so dass die beiden Sensoren im verklebten Zustand unterschiedliche Peak-Wellenlängen besitzen.

Für die Bestimmung der notwendigen Erwärmung kann beispielsweise davon ausgegangen werden, dass pro 1Kelvin Temperaturunterschied $\Delta T$ eine Wellenlängenänderung $\Delta\lambda$ von 0,013nm erreicht wird. Dies folgt aus der folgenden Gleichung:

$$\frac{\Delta\lambda}{\lambda_0} = k \cdot (\alpha_{SP} \cdot \Delta T) + \alpha_\delta \cdot \Delta T,$$

wobei gilt

$\Delta\lambda$ = Änderung der Wellenlänge
k = k-Faktor, k=0,78
$\alpha_{SP}$ = Wärmeausdehnungskoeffizient (Stahl 11...13·$10^{-6}$/K; Aluminium 22...23·$10^{-6}$/K)
$\alpha_\delta$ = Änderung der Brechzahl ($\alpha_\delta$ = 5...8·$10^{-6}$/K)
$\lambda_0$ = Grundwellenlänge
Für eine Glasfaser kann ein Wärmeausdehnungskoeffizient von 0,55·$10^{-6}$/K angenommen werden. Bei einer Grundwellenlänge von 1545nm ergibt sich dann pro 1Kelvin Temperaturunterschied

$$\Delta\lambda = \left(0{,}78 \cdot \left(0{,}55 \cdot 10^{-6} \cdot \frac{1}{K} \cdot 1K\right) + 8 \cdot 10^{-6} \cdot \frac{1}{K} \cdot 1K\right) \cdot 1545nm$$
$$= 0{,}013nm$$

Um eine Wellenlängenänderung von 0,5nm zu erreichen, muss folglich einer der beiden FBG-Sensoren mit einer Temperaturdifferenz zu dem anderen FBG-Sensor von 38,5K verklebt werden.

Eine alternative Möglichkeit, die FBG-Sensoren zueinander zu verstimmen, besteht darin, einen der beiden Sensoren durch Aufwendung einer externen Kraft in axialer Richtung plastisch zu verformen und diese Verformung quasi "einzufrieren". So kann dieser FBG-Sensor mit einer mechanischen Vorspannung auf das Objekt aufgebracht, insbesondere geklebt oder in das Objekt integriert sein, da eine mechanische Vorspannung -wie zuvor erläutert- die Gitterkonstante des Bragg-Gitters ändert und die reflektierte Wellenlänge verschiebt. Vorzugsweise ist ausgehend von identischen FBG-Sensoren der erste FBG-Sensor im Zustand einer Dehnbeanspruchung verklebt und der zweite FBG-Sensor im kraftneutralen Zustand verklebt. Durch das Verkleben des ersten Sensors während er in axialer Richtung einer Zugspannung ausgesetzt ist, wird die Wellenlängenänderung eingefroren.

Praktischerweise kann ein schnell aushärtender Kleber, beispielsweise ein Harz verwendet werden, um zumindest den ersten Sensor schnell zu fixieren, wobei der Kleber zwischen den FBG-Sensor und dem Objekt aufgetragen wird und der den FBG-Sensor vollständig umgibt. An einfachsten kann der Sensor unter eine Zugspannung gesetzt werden, die entweder händisch aufgebracht werden kann oder mittels einer Spannvorrichtung. Eine solche kann beispielsweise zwei gegenüberliegende Doppelschenkel aufweisen, die an einem Ende miteinander verbunden sind. Jeweils ein Ende des FBG-Sensors wird dann in einen Doppelschenkel eingespannt, so dass der Sensor zwischen den beiden Doppelschenkeln gehalten ist. Ein leichtes Spreizen der Doppelschenkel für dann zu einer Zugspannung in der Glasfaser. In diesem Zustand kann der Sensor respektive die Glasfaser auf das Objekt aufgeklebt werden.

Da bereits geringe mechanische Spannungen in der Glasfaser des FGB-Sensors zu einer Verschiebung des Reflexionsspektrums von etwa 1nm führen, ist keine präzise Einstellung der Vorspannung erforderlich. Ein Verkleben unter Anwendung händischer Kraftaufwendung genügt.

Vorzugsweise kann die Lichtquelle eine Super Luminescent Diode (SLED) mit einem Lichtspektrum einer spektralen Breite von mindestens 60nm, vorzugsweise 80nm sein. Derartige SLEDs sind preisgünstig und bieten ausreichend Licht, beispielsweise eine Lichtleistung von mindestens 2mW, insbesondere 3mW bis 5mW, so dass der lichtempfindliche Sensor eine ausreichende Lichtleistung im Falle weit überlappender Reflexionsspektren erhält. Ein breites Spektrum ermöglicht, dass eine große Auswahl an FBG-Sensoren für die Meßanordnung zur Verfügung steht. Beispielsweise kann das Lichtspektrum der Lichtquelle im UV-Bereich, insbesondere zwischen 1510nm bis etwa 1590nm umfassen.

Das zu vermessende Objekt kann ein beliebiges biegeweiches Bauteil sein, beispielsweise ein längliches, schlankes Bauteil wie ein Balken, ein Träger, ein Bogen, ein Flügel oder ein Kragarm, oder ein längliches, rohrförmiges Bauteil, wie beispielsweise ein Wasserrohr oder eine Pipeline, oder auch ein dünnes Bauteil wie beispielsweise eine Platte oder eine Schale. Dünn bedeutet in diesem Sinn folglich, dass das Objekt eine Dicke besitzt, die um mindestens eine Größenordnung geringer ist, als die Länge und/ oder die Breite des Objekts. Das Objekt muss jedoch biegesteif genug sein, um eine Kraft aufnehmen zu können. Biegeweich im Sinne der Erfindung bedeutet demgemäß, dass es zumindest geringfügig unter Krafteinwirkung nachgibt.

Im Falle eines schlanken, dünnen oder rohrförmigen Objekts müssen die beiden FBG-Sensoren übereinander angeordnet sein, wobei der erste FBG-Sensor an der Oberseite des Objekts und der zweite FBG-Sensor an der Unterseite des Objekts anzuordnen ist, bzw. im Falle eines rohrförmigen Objekts an seiner Innenseite und seiner Außenseite. Schlanke und dünne Objekte entsprechen hinsichtlich ihrer Momentenlinie einem einfachen Biegebalken. Auch die Wand eines rohrförmigen Bauteils besitzt zumindest lokal eine Biegekennlinie eines einfachen Biegebalkens. Bei diesem bewirkt eine Druckkraft auf die Oberseite an einem Ende senkrecht zur Längserstreckung während das andere Ende fest gelagert ist, dass die Oberseite am anderen Ende gedehnt wird während die Unterseite an diesem anderen Ende gestaucht wird.

Im Falle eines Doppelbiegebalkens als Objekt müssen die beiden FBG-Sensoren hintereinander angeordnet sein, wobei der erste FBG-Sensor zwischen der Mitte und dem einen Ende des Objekts und der zweite FBG-Sensor zwischen der Mitte und dem anderen Ende des Objekts anzuordnen ist. Auch bei rohrförmigen Objekten kann diese Anordnung verwendet werden, wobei die Sensoren entweder an der Außenseite oder der Innenseite anzuordnen sind. Rohrförmige Objekte entsprechen in ihrer Gesamtheit entlang ihrer Symmetrieachse bezüglich ihrer Biegekennlinie (Momentenlinie) einem Doppelbiegebalken. Bei diesem bewirkt eine Druckkraft auf die Oberseite an einem Ende senkrecht zur Längserstreckung während das andere Ende fest gelagert ist, dass das den Druck aufnehmende Ende gestaucht wird, während das andere Ende gedehnt wird. In der Mitte des Objekts ist dann das durch die Druckkraft bewirkte Moment null.

Es braucht nicht weiter erwähnt zu werden, dass in anderen Ausführungsvarianten auch eine Kombination der vorgenannten Varianten realisiert sein kann. So können beispielsweise mehrere FBG-Sensorenpaare auf bzw. an dem Objekt befestigt oder in diesem integriert sein. Dabei kann ein Sensorpaar gemäß einer ersten der vorbeschriebenen Anordnungsmöglichkeiten und ein anderes Sensorpaar gemäß derselben oder einer anderen der vorgenannten Anordnungsmöglichkeiten angeordnet sein. Alternativ oder zusätzlich können die Sensorenpaare deutlich voneinander unterscheidende Peak-Wellenlängen besitzen.

Das erfindungsgemäße Verfahren respektive die erfindungsgemäße Meßanordnung eignen sich zudem zur Erfassung dynamischer mechanischer Vorgänge in dem Objekt So können beispielsweise aus der kontinuierlichen Messung der lokalen Kraftbeanspruchung mechanische Schwingungen im Objekt detektiert werden. In Abhängigkeit der Amplitude derartiger Schwingungen kann beispielsweise Materialermüdung erkannt oder vorhergesagt werden, so dass frühzeitig, d.h. vor dem Eintritt eines Schadens, ein Austausch der betroffenen Komponente erfolgen kann.

Des Weiteren kann das erfindungsgemäße Verfahren respektive die erfindungsgemäße Meßanordnung zur Detektion akustischer Wellen, insbesondere von Körperschall in dem Objekt verwendet werden. Bereits mikroskopische Risse in dem Objekt senden Körperschall aus, die durch die FBG-Sensoren festgestellt werden können, bevor sich diese vergrößern und zur Zerstörung des gesamten Objekts führen.

Weitere Merkmale und Vorteile der Erfindung werden nachfolgend anhand von zwei konkreten Ausführungsbeispielen unter Bezugnahme auf die beigefügten Figuren beschrieben Es zeigen:

Fig. 1: schematische Darstellung der Meßanordnung

Fig. 1a: schematische Darstellung der Wirkungsweise der Meßanordnung am einfachen Biegebalken ohne Kraftbeanspruchung

Fig. 1b: schematische Darstellung der Wirkungsweise der Meßanordnung am einfachen Biegebalken bei Beanspruchung auf Druck von oben

Fig. 1c: schematische Darstellung der Wirkungsweise der Meßanordnung am einfachen Biegebalken bei Beanspruchung auf Druck von unten

Fig. 2a: schematische Darstellung der Wirkungsweise der Meßanordnung am Doppelbiegebalken ohne Kraftbeanspruchung

Fig. 2b: schematische Darstellung der Wirkungsweise der Meßanordnung am Doppelbiegebalken bei Beanspruchung auf Druck von oben

Fig. 2c: schematische Darstellung der Wirkungsweise der Meßanordnung am Doppelbiegebalken bei Beanspruchung auf Druck von unten

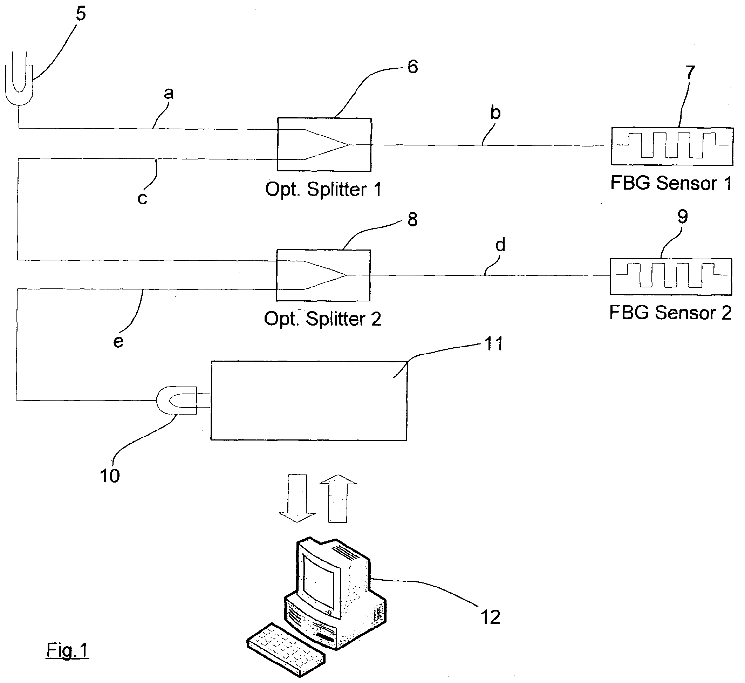

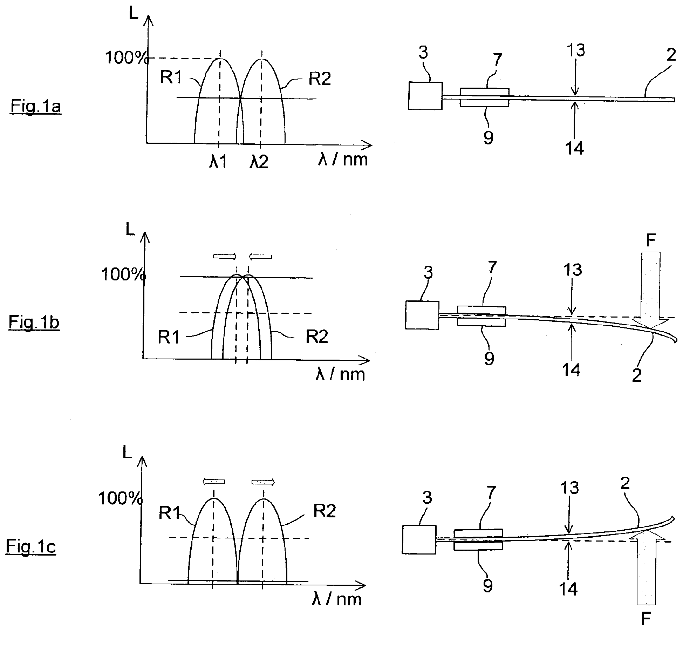

Figur 1 zeigt eine optische Meßanordnung 1, mit der die Kraftbeanspruchung eines Objektes 2, d.h. seine Dehnung (Streckung) und Stauchung lokal festgestellt werden kann. Die Messanordnung 1 umfasst eine spektral breitbandige Lichtquelle 5, einen ersten und einen zweiten FBG-Sensor 7, 9, einen ersten und einen zweiten optischen Splitter 6, 8, einen lichtempfindlichen Sensor 10 und eine Auswerteeinheit (11, 12).

Die Lichtquelle 5 emittiert spektral breitbandiges Licht a einer Wellenlänge 1510nm bis 1590nm, das dem ersten FBG-Sensor 7 zugeführt ist. Der erste FBG-Sensor 7 reflektiert Licht c einer bestimmten Wellenlänge $\lambda_1$ von ca. 1545nm, wobei sich das eingestrahlte Licht a und das zurückreflektierte Licht c vor dem ersten FBG-Sensor 7 überlagern. Das resultierende Gesamtlicht ist in Figur 1 mit dem Referenzzeichen b gekennzeichnet. Der erste optische Splitter 6 ist optisch zwischen der Lichtquelle 5 und dem ersten FBG-Sensor 7 angeordnet, so dass er das von dem ersten FBG-Sensor 7 reflektierte Licht c aus dem Gesamtlicht b auskoppelt.

Das von dem ersten FBG-Sensor reflektierte und von dem ersten Splitter 6 ausgekoppelte Licht c ist dem zweiten FBG-Sensor 9 zugeführt, der Licht e einer bestimmten Wellenlänge $\lambda_2$ von ca. 1546nm reflektiert. Dieses reflektierte Licht e überlagert sich vor dem zweiten FBG-Sensor 9 mit dem reflektierten Licht c des ersten FBG-Sensors 7 zu einem weiteren Gesamtlicht d. Der zweite optische Splitter 8 ist optisch zwischen dem ersten optischen Splitter 6 und dem zweiten FBG-Sensor 9 angeordnet und koppelt das von dem zweiten FBG-Sensor 9 reflektierte Licht e aus dem weiteren Gesamtlicht d aus.

Dieses von dem zweiten FBG-Sensor 9 reflektierte, ausgekoppelte Licht e ist auf den die lichtempfindlichen Sensor 10 geleitet, der die Lichtleistung dieses Lichts e detektiert und in ein elektrisches Signal umwandelt. Dieser Sensor 10 ist mit der elektronischen Auswerteeinheit 11, 12 verbunden, die dazu eingerichtet ist, aus dem Sensorsignal des lichtempfindlichen Sensors 10 die Kraftbeanspruchung des Objekts 2 zu ermitteln.

Die Auswerteeinheit 11, 12 umfasst eine Verstärkungs- und Aufbereitungsstufe 11, in der das Messsignal des Sensors 10 zunächst verstärkt und aufbereitet wird und einen Computer, der die eigentliche Auswertung übernimmt. Das Messsignal wird dann von der Verstärkungs- und Aufbereitungsstufe 11 an den Computer 12 übertragen, der die Bestimmung der Kraftbeanspruchung des Objekts anhand des Messsignals vornimmt. Die Kraftbeanspruchung wird von der Verstärkungs- und Aufbereitungsstufe 11 über eine 0 ... 10 V Ausgangsspannung ausgegeben. An dem Computer 12 wird die Kraftbeanspruchung in einem Messdiagramm grafisch angezeigt.

Die beiden FBG-Sensoren 7, 9 sind identisch ausgebildet, wobei herstellungsbedingte Toleranzen geringfügige Unterschiede der Reflexionsspektren verursachen können, die jedoch vernachlässigbar sind. Die FBG-Sensoren 7, 9 sind durch Einmode-Glasfasern gebildet, in denen Bragg Gitter (Bragg Gratings) eingebracht sind, d.h. in denen die Brechzahl über eine bestimmte Länge der Faser periodisch zwischen einem ersten Wert (Brechzahl der Faser) und einem zweiten Wert (Brechzahl der Gitterlinie) variiert. In dem Ausführungsbeispiel wird jeweils eine Faser mit Brechzahl n = 1,46 und einem Bragg Gitter einer Gitterlänge von 6mm, bei einem Gitterabstand von $G_S$ = 529nm verwendet, so dass die Peak-Wellenlänge des Reflexionsspektrums der FBG-Sensoren 7, 9 bei $\lambda_0$ = 1545nm liegt ($G_S = \lambda_0/2n$). Durch eine Änderung des Gitterabstands kann folglich die Wellenlänge des reflektierten Peaks verändert werden.

Die Einmodefasern bestehen aus einem sehr kleinen inneren Kern mit einem Durchmesser von 4 bis 9 $\mu$m und einer Umhüllung (Mantel, Coating) aus reinem Glas (SiO2) mit einem Durchmesser von 125 $\mu$m. Der Kern ist mit Germanium dotiert und hat daher eine höhere Brechzahl. Aufgrund der unterschiedlichen Brechzahlen von Kern und Mantel breitet sich Licht nur innerhalb des Kerns aus. Die Beschichtung der Glasfaser mit Acrylat, Polyamid oder ORMOCER (ORganic MOdulated CERamic) schützt insbesondere vor Wasser und Wasserstoff. Zum Einbringen des Bragg-Gitters in den Faserkern wird erst die Umhüllung der Faser entfernt und später neu aufgebracht werden. Die Herstellung von Bragg-Gittern erfolgt durch Einbrennen, wobei Excimer-Laser mit Wellenlängen von ca. 240 ... 250nm verwendet werden und die Faser mit einem Interferenzmuster belichtet wird.

Das Interferenzmuster kann mit Hilfe einer Phasenmaske oder durch ein Überlagern von Laserstrahlen erzeugt werden. Im Standardverfahren zur Herstellung von starkreflektierenden FBG (Peak-Reflexionsfaktor > 90 %) wird eine Standard-Telekommunikationsfaser abgemantelt (Entfernen des Acrylat- oder Polyamid-Mantels), die Faser dem Ultraviolett-Interferenzmuster ausgesetzt und schließlich wieder in eine entsprechende Ummantelung eingebettet. Wenn Faser-Bragg-Gitter-Sensoren Dehnung messen sollen, ist ein Polyamid- Mantel die richtige Lösung, denn Acrylat ist zu weich, um die Dehnung zu übertragen. Die eingestrahlte Energie liegt im Bereich von mehreren Hundert J/cm2 und verursacht eine Änderung der Brechzahl von 0.01 % ... 0.1 %. Da die Herstellung von Faser Bragg Gratings im Stand der Technik weitgehend bekannt ist, wird hier nicht näher darauf eingegangen. Für die erfindungsgemäße Meßanordnung kann als FBG-Sensoren 7, 9 beispielsweise der Typ K-OL der Firma HBM verwendet werden.

Zum Messen von Dehnungen werden die Sensoren am oder im Objekt befestigt. Das Dehnen eines Faser-Bragg-Gitter-Sensors führt zu einer Änderung der Gitterperiode, die wiederum die Wellenlänge des reflektierenden UV-Lichts verändert.

Der erste FBG-Sensor 7 wird spannungsneutral auf ein Objekt aufgeklebt, so dass er auch im montierten Zustand unverändert sein herstellungsgemäßes Reflexionsspektrum besitzt, d.h. die Peak-Wellenlänge des Reflexionsspektrums R1 bei $\lambda_1$ = 1545nm liegt. Der zweite FBG-Sensor 7 wird mit einer Vorspannung auf das Objekt aufgeklebt, so dass sein Bragg Gitter im montierten Zustand geringfügig gedehnt ist. Die Dehnung erfolgt manuell unter Verwendung eines schnell härtenden Klebers. Die Peak-Wellenlänge des Reflexionsspektrums R2 des zweiten FBG-Sensors 9 liegt dann bei ca. $\lambda_2$ = 1546nm.

Die Lichtquelle 5 ist durch eine superhelle Leuchtdiode (SLED) gebildet, deren abgestrahltes Licht a im Wesentlichen gleichmäßig im Bereich zwischen 1510nm und 1590nm liegt. Beispielsweise kann die SLED IPSDD1503 (1550nm) der Firma INPHENIX verwendet werden.

Die optischen Splitter 6, 8 sind in Glasfasertechnik realisiert. Beispielsweise können optische Zirkulatoren GPC-CIR-P-15-90-FA der Firma GENERAL PHOTONICS verwendet werden. Diese Zirkulatoren werden in der Messkette als Weichen eingesetzt, die das reflektierte Licht c des ersten FBG-Sensors 7 von dem Licht a der Breitband-Lichtquelle 5 trennen. Die Splitter 6, 8 sind von Werk aus mit 1m Faserlänge und Stecker vorkonfektioniert und können mit Durchgangsverbindern leicht in die Messkette integriert werden.

Die Lichtführung zwischen den genannten optischen Bauelementen erfolgt über Lichtwellenleiter, wobei Durchgangsverbinder (FC/APC Steckverbindungen) zum Verbinden der optischen Bauelemente miteinander verwendet werden. Die Leitungslänge kann bis zu einigen Hundert Metern betragen, wichtig ist nur, dass es an dem offenen Ende des FBG-Sensoren 7, 9 nicht zu einer Rückreflexion kommt. Durch die Rückreflexion kann es zu starken Störungen des Messsignals kommen.

Der die Lichtleistung detektierende Sensor 10 ist durch eine Photodiode oder einen Phototransistor gebildet. Beispielsweise kann die Photodiode PD3000 von der Firma APPLIED OPTOELECTRONICS, INC. verwendet werden. Die Photodiode ist an einen Stromverstärker 11 angeschlossen, der den Photostrom verstärkt und in eine Messspannung umwandelt. Beispielsweise kann der Stromverstärker DLPCA-200 der Firma FEMTO verwendet werden, der eine Ausgangsspannung zwischen 0 und 10V ausgibt. Der Stromverstärker 11 ist an einen herkömmlichen Computer 12 angeschlossen. Mit der Software DASYLAB (Data Aquisition System Laboratory) und einem passenden 16-Bit USB-A/D-Wandler (z.B. ein NI-6216 der Firma NATIONAL INSTRUMENTS) kann ein komplettes Messsystem realisiert werden, mit dem die Messdaten als Diagramme ausgegeben werden können.

Erfindungsgemäß sind der erste FBG-Sensor 7 und der zweite FBG-Sensor 9 beide fest mit dem Objekt 2 verbunden, so dass sich die Kraftbeanspruchung des Objekts 2 auf beide FBG-Sensoren 7, 9 überträgt, d.h. diese der Dehnung und Stauchung des Objekts ebenfalls unterworfen sind. Dies kann dadurch erfolgt, dass die FBG-Sensoren 7, 9 in das Material, aus dem das Objekt 2 besteht, eingebracht oder auf das Objekts 2 aufgeklebt sind, beispielsweise mittels eines Harzes. Die Positionierung der beiden FBG-Sensoren 7, 9 in oder an dem Objekt 2 ist derart, dass sie entgegengesetzt wirkende Kräfte aufnehmen. Dies bedeutet, dass der erste FBG-Sensor 7 bei einer Kraftbeanspruchung des Objekts 2 in eine Richtung eine Dehnung erfährt, während der zweite FBG-Sensor 9 gestaucht wird, und dass der erste FBG-Sensor 7 bei einer Kraftbeanspruchung des Objekts 2 in die entgegengesetzte Richtung eine Stauchung erfährt, während der zweite FBG-Sensor 9 gedehnt wird. Dies wird anhand der weiteren Figuren näher erläutert.

Fig. 1a, 1b und 1c veranschaulichen das erfindungsgemäße Messverfahren anhand eines einfachen Biegebalkens als Messobjekt 2, der an einem Ende 3 fest gelagert ist. Der erste FBG-Sensor 7 ist auf der Oberseite 13 des Biegebalkens 2 angeordnet, während der zweite FBG-Sensor 9 auf dessen Unterseite 14 angeordnet ist. Sie sind folglich übereinander angeordnet. Fig. 1a zeigt den Biegebalken 2 im kraftunbeanspruchten Zustand. In diesem Zustand überlagern sich das Reflexionsspektrum R1 des ersten FBG-Sensors 7 und das Reflexionsspektrum R2 des zweiten FBG-Sensors 9 nur teilweise, so dass das von dem zweiten FBG-Sensor 9 reflektierte Licht eine mittlere Intensität besitzt. Dies ist in dem Diagramm in Fig. 1a links dargestellt, wobei die Ordinate die relative Leistungsdichte angibt.

In Fig. 1b wird der Biegebalken 2 an dem freien Ende mit einer Druckkraft von oben auf die Oberseite 13 beansprucht. Er biegt sich in Folge dessen nach unten. Dabei dehnt sich am eingespannten Ende die Oberseite 13 des Balkens 2 während die Unterseite 14 gestaucht wird. Die Dehnung überträgt sich auf den ersten FBG-Sensor 7, wobei sich dessen Peak-Wellenlänge erhöht respektive sich sein gesamtes Reflexionsspektrum R1 in Richtung größer werdender Wellenlängen verschiebt. In entsprechender Weise überträgt sich die Stauchung auf den zweiten FBG-Sensor 9, wobei sich dessen Peak-Wellenlänge verkleinert respektive sich sein gesamtes Reflexionsspektrum R1 in Richtung kleiner werdender Wellenlängen verschiebt. Dies ist in dem Diagramm in Fig. 1b links veranschaulicht. Die beiden Reflexionsspektren bewegen sich folglich aufeinander zu, so dass sie sich mehr überlappen. Hierdurch erhöht sich die Intensität des Lichts e, das von dem zweiten FBG-Sensor 9 reflektiert wird. Werden die Reflexionsspektren nahezu deckungsgleich, wird das gesamte Licht c, das von dem ersten FBG-Sensor 7 reflektiert worden ist, von dem zweiten FBG-Sensor 9 reflektiert.

In Fig. 1c wird der Biegebalken 2 an dem freien Ende mit einer Druckkraft von unten auf die Unterseite 14 beansprucht. Er biegt sich in Folge dessen nach oben. Dabei dehnt sich am eingespannten Ende die Unterseite 14 des Balkens 2 während die Oberseite 13 gestaucht wird. Die Stauchung überträgt sich auf den ersten FBG-Sensor 7, wobei sich dessen Peak-Wellenlänge reduziert respektive sich sein gesamtes Reflexionsspektrum R1 in Richtung kleiner werdender Wellenlängen verschiebt. In entsprechender Weise überträgt sich die Dehnung auf den zweiten FBG-Sensor 9, wobei sich dessen Peak-Wellenlänge erhöht respektive sich sein gesamtes Reflexionsspektrum R1 in Richtung größer werdender Wellenlängen verschiebt. Dies ist in dem Diagramm in Fig. 1c links veranschaulicht. Die beiden Reflexionsspektren bewegen sich folglich voneinander weg, so dass sie sich zunehmen weniger überlappen. Hierdurch reduziert sich die Intensität des Lichts e, das von dem zweiten FBG-Sensor 9 reflektiert wird.

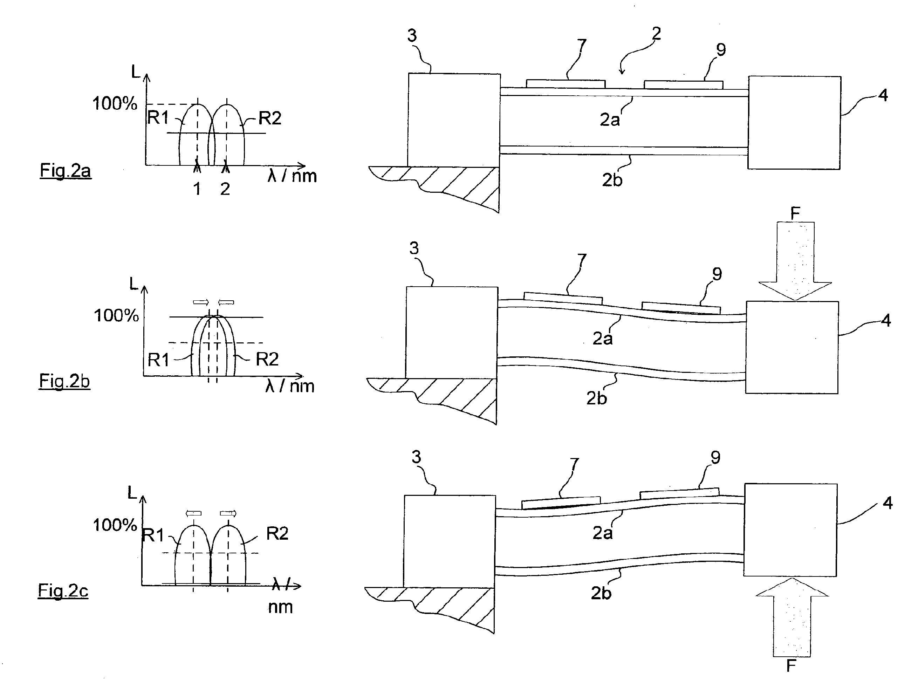

Figur 2a zeigt schematisch als Messobjekt einen Doppelbiegebalken 2 im kraftunbeanspruchten Zustand bestehend aus zwei übereinander liegenden Biegebalken 2a, 2b, die an ihren Enden jeweils in einem Sockel 3, 4 fest miteinander verbunden sind. Einer der Sockel 3 ist fest an einer Halterung montiert und dadurch gelagert, der gegenüberliegende Sockel 4 schwebt frei.

Für Messungen von Oberflächendehnungen ist eine Biegebalkenanordnung sehr gut geeignet, da bei einer Krafteinwirkung die eine Hälfte des Biegebalkens gedehnt wird, während die andere Hälfte gestaucht wird. Dies resultiert daraus, dass das Moment entlang der Längsrichtung des Doppelbiegebalkens 2 an den Enden einer Einzel-Biegebalken 2a, 2b, d.h. dort, wo diese in die Sockel 3, 4 übergehen, jeweils betraglich maximal ist, wobei das Moment an diesen Enden entgegengesetzte Vorzeichen hat, und in der Mitte des Doppelbiegebalkens 2 zwischen den Sockeln 3, 4 den Wert null hat.

Die FBG-Sensoren 7, 9 sind auf der Oberseite des oberen Biegebalkens 2a aufgeklebt. Sie sind hintereinander angeordnet. Dabei ist der erste FBG-Sensor 7 zwischen der Mitte des Biegebalkens 2 und dem seinem eingespannten Ende, Sockel 3, positioniert, wohingegen der zweite FBG-Sensor 9 zwischen der Mitte des Biegebalkens 2 und seinem freien Ende, Sockel 4, positioniert ist. Dies bewirkt, dass bei einer Krafteinwirkung auf das freie Ende, d.h. auf den frei schwebenden Sockel 4, die beiden FBG-Sensoren 7, 9 eine entgegengesetzte Kraftbeanspruchung erfahren. So wird der eine FBG-Sensor gestaucht, während der andere FBG-Sensor gestreckt wird. Die Positionierung sollte dabei soweit wie möglich am Ende der Biegebalken 2a, 2b sein, weil dort die maximale Dehnung/ Stauchung vorliegt.

In Folge fehlender Krafteinwirkung bei Fig. 2a überlagern sich die Reflexionsspektren R1, R2 der beiden FBG-Sensoren 7, 9 nur teilweise, siehe Diagramm in Fig. 2a links. Daraus ergibt sich ein Ausgangssignal des zweiten FBG-Sensors 7 bzw. des lichtempfindlichen Sensors 10 mittlerer Intensität.

In Fig. 2b wird eine Druckkraft von oben auf den Doppelbiegebalken 2 eingeleitet. Hierdurch wird der erste FBG-Sensor 7 gestreckt, wobei sein Reflexionsspektrum R1 nach rechts wandert, und der zweite FBG-Sensor 9 gestaucht, wobei sein Reflexionsspektrum R2 nach links wandert. Die Reflexionsspektren bewegen sich folglich auf einander zu, so dass sie sich zunehmend mehr überlappen. Daraus ergibt sich ein Ausgangssignal des zweiten FBG-Sensors 7 bzw. des lichtempfindlichen Sensors 10 hoher Intensität.

In Fig. 2c wird eine Druckkraft von unten auf den Doppelbiegebalken 2 eingeleitet. Hierdurch wird der erste FBG-Sensor 7 gestaucht, wobei sein Reflexionsspektrum R1 nach links wandert, und der zweite FBG-Sensor 9 gestreckt, wobei sein Reflexionsspektrum R2 nach rechts wandert. Die Reflexionsspektren bewegen sich folglich voneinander weg, so dass sie sich zunehmen weniger überlappen. Daraus ergibt sich ein Ausgangssignal des zweiten FBG-Sensors 7 bzw. des lichtempfindlichen Sensors 10 geringer Intensität.

In den beschriebenen Varianten nach Figuren 1a bis 1c und 2a bis 2c sind die beiden FBG-Sensoren 7, 9 auf dem Objekt lokal benachbart angebracht, so dass sie dieselbe Temperatur erfahren. Hierdurch kompensieren sich etwaige Temperatureffekte. Wenn sich jetzt die Temperatur ändert, verschieben sich beide reflektierten Wellenlänge-Peaks in dieselbe Richtung und die Temperaturänderungen haben keine Auswirkung auf die Messung.

Mit der erfindungsgemäßen Messanordnung und dem entsprechenden Messverfahren können dynamische Vorgänge im Objekt erfasst und ausgewertet werden. Da die (mikro-)mechanische Bewegung im Objekt zu Körperschall führt, können mit der erfindungsgemäßen Messung der Kraftbeanspruchung auch akustische Ereignisse erfasst und ausgewertet werden. Die auf dem Markt schon vorhandenen Geräte sind in ihrer Abtastrate (2 kHz - 19,6 kHz) zu langsam, um auch akustische Ereignisse sicher zu messen. Dieses Problem wird durch die vorliegende Erfindung behoben.

## Patentansprüche

1.  Optische Messanordnung (1) zur Erfassung der lokalen Kraftbeanspruchung eines biegeweichen Objekts (2), umfassend

    - eine spektral breitbandige Lichtquelle (5) zur Emittierung spektral breitbandigen Lichts (a),
    - einen ersten Faser-Bragg-Gitter (FBG)-Sensor (7), dem das spektral breitbandige Licht (a) zugeführt ist und der daraus Licht (c) einer bestimmten ersten Wellenlänge ($\lambda_1$) reflektiert, bei der das Reflexionsspektrum (R1) des ersten FBG-Sensors (7) ein Maximum besitzt,

- einen ersten optischen Splitter (6), der zwischen der Lichtquelle (5) und dem ersten FBG-Sensor (7) angeordnet ist und der das von dem ersten FBG-Sensor (7) reflektierte Licht (c) auskoppelt,
- einen zweiten Faser-Bragg-Gitter (FBG)-Sensor (9), dem das von dem ersten FBG-Sensor (7) reflektierte Licht (c) zugeführt ist und der Licht (e) einer bestimmten zweiten Wellenlänge ($\lambda_2$) reflektiert, bei der das Reflexionsspektrum (R2) des zweiten FBG-Sensors (9) ein Maximum besitzt,
- einen zweiten optischen Splitter (8), der zwischen dem ersten Splitter (6) und dem zweiten FBG-Sensor (9) angeordnet ist und der das von dem zweiten FBG-Sensor (9) reflektierte Licht (e) auskoppelt,
- einen lichtempfindlichen Sensor (10) und eine mit diesem verbundene Auswerteeinheit (11, 12), wobei das von dem zweiten FBG-Sensor (9) reflektierte Licht (e) auf den lichtempfindlichen Sensor (10) geleitet ist und die Auswerteeinheit (11, 12) dazu eingerichtet ist, aus dem Sensorsignal des lichtempfindlichen Sensors (10) die Kraftbeanspruchung des Objekts (2) zu ermitteln,
**dadurch gekennzeichnet,**
- **dass** der erste FBG-Sensor (7) und der zweite FBG-Sensor (9) fest mit dem Objekt (2) derart verbunden sind, dass sich die Kraftbeanspruchung des Objekts (2) auf beide FBG-Sensoren (7, 9) überträgt,
- **dass** sich die erste und die zweite Wellenlänge ($\lambda_1$, $\lambda_2$) derart unterscheiden, dass sich die Reflexionsspektren des ersten und des zweiten FBG-Sensors (7, 9) im kraftunbeanspruchten Zustand des Objekts (2) nur teilweise überlappen, und
- **dass** die beiden FBG-Sensoren (7, 9) derart an oder in dem Objekt (2) angeordnet sind, dass sie entgegengesetzt wirkende Kräfte aufnehmen.

2. Messanordnung nach Anspruch 1, **dadurch gekennzeichnet, dass** der erste FBG-Sensor (7) und der zweite FBG-Sensor (9) mit dem Objekt (2) verklebt sind.

3. Messanordnung nach Anspruch 2, **dadurch gekennzeichnet, dass** ausgehend von identischen FBG-Sensoren (7, 9) der erste FBG-Sensor (7) warmverklebt und der zweite FBG-Sensor (9) kaltverklebt ist.

4. Messanordnung nach Anspruch 1, **dadurch gekennzeichnet, dass** der erste FBG-Sensor (7) und der zweite FBG-Sensor (9) in dem Objekt (2) integriert sind.

5. Messanordnung nach einem der vorherigen Ansprüche, **dadurch gekennzeichnet, dass** der Unterschied zwischen der ersten und der zweiten Wellenlänge ($\lambda_1$, $\lambda_2$) im kraftneutralen Zustand der FBG-Sensoren (7, 9) zwischen 0,5nm und 2,5nm beträgt.

6. Messanordnung nach einem der vorherigen Ansprüche, **dadurch gekennzeichnet, dass** die beiden FBG-Sensoren (7, 9) in ihrem kraftneutralen Zustand identisch sind, wobei einer der beiden FBG-Sensoren (7, 9) mit einer mechanischen Vorspannung auf das Objekt (2) aufgebracht oder in das Objekt (2) integriert ist.

7. Messanordnung nach Anspruch 6, **dadurch gekennzeichnet, dass** ausgehend von identischen FBG-Sensoren (7, 9) der erste FBG-Sensor (7) im Zustand einer Dehnbeanspruchung verklebt und der zweite FBG-Sensor (9) im kraftneutralen Zustand verklebt ist.

8. Messanordnung nach einem der vorherigen Ansprüche, **dadurch gekennzeichnet, dass** die Lichtquelle (5) eine Super Luminescent Diode (SLED) mit einem Lichtspektrum einer spektralen Breite von mindestens 60nm, vorzugsweise 80nm ist.

9. Messanordnung nach Anspruch 8, **dadurch gekennzeichnet, dass** das Lichtspektrum der Lichtquelle (5) von etwa 1510nm bis etwa 1590nm reicht.

10. Messanordnung nach einem der vorherigen Ansprüche, **dadurch gekennzeichnet, dass** das Objekt (2) schlank, dünn oder rohrförmig ist und die beiden FBG-Sensoren (7, 9) übereinander angeordnet sind, wobei der erste FBG-Sensor (7) an der Oberseite (13) oder Außenseite des Objekts (2) und der zweite FBG-Sensor (8) an der Unterseite (14) oder Innenseite des Objekts (2) angeordnet ist.

11. Messanordnung nach einem der Ansprüche 1 bis 9, **dadurch gekennzeichnet, dass** das Objekt (2) rohrförmig oder ein Doppelbiegebalken (2) ist und die beiden FBG-Sensoren (7, 9) hintereinander angeordnet sind, wobei der erste FBG-Sensor (7) zwischen der Mitte und dem einen Ende des Objekts (2) und der zweite FBG-Sensor (8) zwischen der Mitte und dem anderen Ende des Objekts (2) angeordnet ist.

**12.** Verfahren zur Erfassung der lokalen Kraftbeanspruchung eines biegeweichen Objekts (2), bei dem eine Lichtquelle (5) ein spektral breitbandiges Lichts (a) emittiert, das zu einem ersten Faser-Bragg-Gitter (FBG)-Sensor (7) geführt ist, der daraus Licht (c) einer bestimmten ersten Wellenlänge ($\lambda_1$) reflektiert, bei der das Reflexionsspektrum (R1) des ersten FBG-Sensors (7) ein Maximum besitzt, wobei das von dem ersten FBG-Sensor (7) reflektierte Licht (c) von einem ersten optischen Splitter (6), der zwischen der Lichtquelle (5) und dem ersten FBG-Sensor (7) angeordnet ist, ausgekoppelt und einem zweiten Faser-Bragg-Gitter (FBG)-Sensor (9) zugeführt wird, der Licht (e) einer be-stimmten zweiten Wellenlänge ($\lambda_2$) reflektiert, bei der das Reflexionsspektrum (R2) des zweiten FBG-Sensors (9) ein Maximum besitzt, wobei ferner das von dem zweiten FBG-Sensor (9) reflektierte Licht (e) von einem zweiten optischen Splitter (8), der zwischen dem ersten Splitter (6) und dem zweiten FBG-Sensor (9) angeordnet ist, ausgekoppelt und einem lichtempfindlichen Sensor (10) zugeführt wird, der mit einer Auswerteeinheit (11, 12) verbunden ist, die aus dem Sensorsignal des lichtempfindlichen Sensors (10) die Kraftbeanspruchung des Objekts (2) ermittelt, **dadurch gekennzeichnet,**

- **dass** der erste FBG-Sensor (7) und der zweite FBG-Sensor (9) fest mit dem Objekt (2) derart verbunden sind, dass sich die Kraftbeanspruchung des Objekts (2) auf beide FBG-Sensoren (7, 9) überträgt,
- **dass** sich die erste und die zweite Wellenlänge ($\lambda_1$, $\lambda_2$) derart unterscheiden, dass sich die Reflexionsspektren des ersten und des zweiten FBG-Sensors (7, 9) im kraftunbeanspruchten Zustand des Objekts (2) nur teilweise überlappen, und
- **dass** die beiden FBG-Sensoren (7, 9) derart an oder in dem Objekt (2) angeordnet sind, dass sie entgegengesetzt wirkende Kräfte aufnehmen.

**13.** Verwendung der Messanordnung (1) nach einem der Ansprüche 1 bis 11 und des Verfahrens nach Anspruch 12 zur Detektion mechanischer Schwingungen in dem Objekt (2).

**14.** Verwendung der Messanordnung (1) nach einem der Ansprüche 1 bis 11 und des Verfahrens nach Anspruch 12 zur Detektion akustischer Wellen, insbesondere von Körperschall in dem Objekt (2).

**Claims**

**1.** Optical measuring arrangement (1) for capturing the local stress of a flexible object (2), comprising

- a spectral broadband light source (5) for emitting spectral broadband light (a),
- a first fibre Bragg grating (FBG) sensor (7) to which the spectral broadband light (a) is supplied and which subsequently reflects light (c) of a specific first wave length ($\lambda_1$), in which the reflection spectrum (R1) of the first FBG sensor (7) has a maximum,
- a first optical splitter (6) arranged between the light source (5) and the first FBG sensor (7) that decouples the light (c) reflected by the first FBG sensor (7),
- a second fibre Bragg grating (FBG) sensor (9) to which the light (c) reflected by the first FBG sensor (7) is supplied and that reflects light (e) of a specific second wave length ($\lambda_2$), in which the reflection spectrum (R2) of the second FBG sensor (9) has a maximum,
- a second optical splitter (8) arranged between the first splitter (6) and the second FBG sensor (9) that decouples the light (e) reflected by the second FBG sensor (9),
- a light-sensitive sensor (10) and evaluating unit connected to the same (11, 12), in which the light (e) reflected by the second FBG sensor (9) is conducted onto the light-sensitive sensor (10) and the evaluating unit (11, 12) is configured to determine the stress of the object (2) from the sensor signal of the light-sensitive sensor (10), **characterised by**
- the first FBG sensor (7) and the second FBG sensor (9) being firmly connected to the object (2) in such a manner that the stress of the object (2) is transferred to both FBG sensors (7, 9),
- the first and second wave length ($\lambda_1$, $\lambda_2$) differing in such a manner that the reflection spectra of the first and second FBG sensor (7, 9) overlap only partly in the non-stress state of the object (2), and
- the two FBG sensors (7, 9) being arranged on or in the object (2) in such a manner that they absorb forces that act in opposite directions.

**2.** Measuring arrangement according to claim 1, **characterised by** the first FBG sensor (7) and the second FBG sensor (9) being glued to the object (2).

**3.** Measuring arrangement according to claim 2, **characterised by,** assuming identical FBG sensors (7, 9), the first FBG sensor (7) being warm glued and the second FBG sensor (9) being cold glued.

4. Measuring arrangement according to claim 1, **characterised by** the first FBG sensor (7) and the second FBG sensor (9) being integrated into the object (2).

5. Measuring arrangement according to one of the preceding claims,
**characterised by** the difference between the first and second wave length ($\lambda_1$, $\lambda_2$) in the force-neutral state of the FBG sensors (7, 9) being between 0.5nm and 2.5nm.

6. Measuring arrangement according to one of the preceding claims,
**characterised by** the two FBG sensors (7, 9) being identical in their force-neutral state, in which one of the two FBG sensors (7, 9) is applied to the object with a mechanical pretension (2) or integrated into the object (2).

7. Measuring arrangement according to claim 6, **characterised by,** assuming identical FBG sensors (7, 9), the first FBG sensor (7) being glued in the state of tensile stress and the second FBG sensor (9) being glued in the force-neutral state.

8. Measuring arrangement according to one of the preceding claims,
**characterised by** the light source (5) being a super luminescent diode (SLED) with a light spectrum in a spectral range of at least 60nm, preferably 80nm.

9. Measuring arrangement according to claim 8, **characterised by** the light spectrum of the light source (5) extending from about 1510nm to about 1590nm.

10. Measuring arrangement according to one of the preceding claims,
**characterised by** the object (2) being slim, thin or tube-shaped and the two FBG sensors (7, 9) being arranged one above the other, in which the first FBG sensor (7) is arranged on the upper side (13) or outside of the object (2) and the second FBG sensor (8) is arranged on the lower side (14) or inside of the object (2).

11. Measuring arrangement according to one of the claims 1 through 9,
**characterised by** the object (2) being tube-shaped or a double bending beam (2) and the two FBG sensors (7, 9) being arranged one behind the other, in which the first FBG sensor (7) is arranged between the middle and one end of the object (2) and the second FBG sensor (8) is arranged between the middle and the other end of the object (2).

12. Method for capturing the local stress of a flexible object (2), in which a light source (5) emits a spectral broadband light (a), which is supplied to a first fibre Bragg grating (FBG) sensor (7) that subsequently reflects light (c) of a specific first wave length ($\lambda_1$), in which the reflection spectrum (R1) of the first FBG sensor (7) has a maximum, in which the light (c) reflected by the first FBG sensor (7) is decoupled by a first optical splitter (6) arranged between the light source (5) and the first FBG sensor (7) and supplied to a second fibre Bragg grating (FBG) sensor (9) that reflects light (e) of a specific second wave length ($\lambda_2$), in which the reflection spectrum (R2) of the second FBG sensor (9) has a maximum, in which light (e) reflected by the second FBG sensor (9) is further decoupled by a second optical splitter (8) that is arranged between the first splitter (6) and the second FBG sensor (9) and supplied to a light-sensitive sensor (10), which is connected to the evaluating unit (11, 12) that, from the sensor signal of the light-sensitive sensor (10), determines the stress of the object (2),
**characterised by**

- the first FBG sensor (7) and the second FBG sensor (9) being firmly connected to the object (2) in such a manner that the stress of the object (2) is transferred to both FBG sensors (7, 9),
- the first and second wave length ($\lambda_1$, $\lambda_2$) differing in such a manner that the reflection spectra of the first and second FBG sensor (7, 9) overlap only partly in the non-stress state of the object (2), and
- the two FBG sensors (7, 9) being arranged on or in the object (2) in such a manner that they absorb forces that act in opposite directions.

13. Use of the measuring arrangement (1) according to one of the claims 1 through 11 and the method according to claim 12 for the detection of mechanical vibrations in the object (2).

14. Use of the measuring arrangement (1) according to one of the claims 1 through 11 and the method according to claim 12 for the detection of acoustic waves, in particular structure-borne sound, in the object (2).

**Revendications**

1. Dispositif de mesure optique (1) de détermination de la contrainte locale exercée sur un objet flexible (2), comprenant

   - une source lumineuse spectrale large bande (5) destinée à émettre une lumière spectrale large bande (a),
   - un premier capteur réflecteur de Bragg distribué (RGD) (7), recevant la lumière spectrale large bande (a) et la réfléchissant en une lumière (c) d'une longueur d'onde déterminée ($\lambda_1$), le spectre de réflexion (R1) du premier capteur RGD (7) présentant un maximum,
   - un premier séparateur (6) placé entre la source lumineuse (5) et le premier capteur RGD (7) et découplant la lumière (c) réfléchie du premier capteur RGD (7),
   - un second capteur réflecteur de Bragg distribué (RGD) (9), recevant la lumière réfléchie (c) par le premier capteur RGD (7) et la réfléchissant en une lumière (e) d'une longueur d'onde déterminée ($\lambda_2$), le spectre de réflexion (R2) du second capteur RGD (9) présentant un maximum,
   - un second séparateur (8) placé entre le premier séparateur (6) et le second capteur RGD (9) et découplant la lumière (e) réfléchie du second capteur RGD (9),
   - Un capteur photosensible (10) auquel est connecté une unité d'analyse (11, 12), sachant que la lumière (e) réfléchie par le second capteur RGD (9) est envoyée sur le capteur photosensible (10) et que l'unité d'analyse (11, 12) est configurée pour calculer à partir du signal du capteur photosensible (10) la contrainte exercée sur l'objet (2),

   **caractérisé en ce que**
   - le premier capteur RGD (7) et le second capteur RGD (9) sont fixés de telle façon sur l'objet (2) que la contrainte exercée sur l'objet (2) se transmet aux deux capteurs RGD (7, 9),
   - la première et la seconde longueur d'onde ($\lambda_1$, $\lambda_2$) se différencient de telle façon que les spectres de réflexion du premier et du second capteur RGD (7, 9) ne se chevauchent que partiellement lorsque l'objet (2) est dans un état non contraint, et
   - les deux capteurs RGD (7, 9) sont positionnés de telle façon sur ou dans l'objet (2) qu'ils supportent les forces agissant en sens opposé.

2. Dispositif de mesure selon la revendication 1, **caractérisé en ce que** le premier capteur RGD (7) et le second capteur RGD (9) sont collés à l'objet (2).

3. Dispositif de mesure selon la revendication 2, **caractérisé en ce que,** sachant que les deux capteurs RGD (7, 9) sont identiques, le premier capteur FBG (7) est collé à chaud et le second capteur FBG (9) est collé à froid.

4. Dispositif de mesure selon la revendication 1, **caractérisé en ce que** le premier capteur RGD (7) et le second capteur RGD (9) sont intégrés dans l'objet (2).

5. Dispositif de mesure selon l'une des revendications précédentes, **caractérisé en ce que** la différence entre la première et la seconde longueur d'onde ($\lambda_1$, $\lambda_2$) lorsque les capteurs RGD (7, 9) sont en état neutre vis-à-vis des forces est entre 0,5 nm et 2,5 nm.

6. Dispositif de mesure selon l'une des revendications précédentes, **caractérisé en ce que** les deux capteurs RGD (7, 9) en état neutre vis-à-vis des forces sont identiques, sachant qu'un des deux capteurs RGD (7, 9) est monté avec une précontrainte mécanique sur l'objet (2) ou est intégré dans l'objet (2).

7. Dispositif de mesure selon la revendication 6, **caractérisé en ce que,** sachant que les deux capteurs RGD (7, 9) sont identiques, le premier capteur FBG (7) est collé en état d'une contrainte d'allongement et le second capteur RGD (9) est collé en état neutre vis-à-vis des forces.

8. Dispositif de mesure selon l'une des revendications précédentes, **caractérisé en ce que** la source lumineuse (5) est une diode supraluminescente (Super Luminescent Diode, SLED) avec un spectre lumineux d'une largeur spectrale d'au moins 60 nm, de préférence 80 nm.

9. Dispositif de mesure selon la revendication 8, **caractérisé en ce que** le spectre lumineux de la source lumineuse (5) est entre environ 1 510 nm et environ 1 590 nm.

10. Dispositif de mesure selon l'une des revendications précédentes, **caractérisé en ce que** l'objet (2) est mince, fin ou tubulaire et les deux capteurs RGD (7, 9) sont superposés, sachant que le premier capteur RGD (7) est disposé sur la partie supérieure (13) ou l'extérieur de l'objet (2) et le second capteur RGD (8) est disposé sur la partie inférieure (14) ou l'intérieur de l'objet (2).

**11.** Dispositif de mesure selon l'une des revendications 1 à 9, **caractérisé en ce que** l'objet (2) est tubulaire ou forme une double barre de flexion (2) et les deux capteurs RGD (7, 9) se succèdent, sachant que le premier capteur RGD (7) est placé entre le milieu et une extrémité de l'objet (2) et le second capteur RGD (8) est disposé entre le milieu et l'autre extrémité de l'objet (2).

**12.** Procédé de détermination de la force locale exercée sur un objet flexible (2), dans lequel une source lumineuse (5) émet une lumière spectrale large bande (a), envoyée vers un premier capteur réflecteur de Bragg distribué (RGD) (7), qui la réfléchit en une lumière (c) d'une longueur d'onde déterminée ($\lambda_1$), le spectre de réflexion (R1) du premier capteur RGD (7) présentant un maximum, sachant que la lumière (c) réfléchie par le premier capteur RGD (7) est découplée par un séparateur optique (6) placé entre la source lumineuse (5) et le premier capteur RGD (7) et envoyée à un second capteur réflecteur de Bragg distribué (RGD) (9), qui la réfléchit en une lumière (e) d'une longueur d'onde déterminée ($\lambda_2$), le spectre de réflexion (R2) du premier capteur RGD (9) présentant un maximum, sachant que la lumière (e) réfléchie par le second capteur RGD (9) est découplée par un séparateur optique (8) placé entre le premier séparateur optique (6) et le second capteur RGD (9) et envoyée à un capteur photosensible (10), connecté à une unité d'analyse (11, 12), laquelle calcule à partir du signal du capteur photosensible (10) la contrainte exercée sur l'objet (2),

**caractérisé en ce que**

- le premier capteur RGD (7) et le second capteur RGD (9) sont fixés de telle façon sur l'objet (2) que la contrainte exercée sur l'objet (2) se transmet aux deux capteurs RGD (7, 9),
- la première et la seconde longueur d'onde ($\lambda_1$, $\lambda_2$) se différencient de telle façon que les spectres de réflexion du premier et du second capteur RGD (7, 9) ne se chevauchent que partiellement lorsque l'objet (2) est dans un état non contraint, et
- les deux capteurs RGD (7, 9) sont positionnés de telle façon sur ou dans l'objet (2) qu'ils supportent les forces agissant en sens opposé.

**13.** Utilisation du dispositif de mesure (1) selon l'une des revendications 1 à 11 et du procédé selon la revendication 12 pour la détection d'oscillations mécaniques dans l'objet (2).

**14.** Utilisation du dispositif de mesure selon l'une des revendications 1 à 11 et du procédé selon la revendication 12 pour la détection d'ondes acoustiques, particulièrement de bruits de structure dans l'objet (2).

7

FBG Sensor 1

9

FBG Sensor 2

b

d

6

Opt. Splitter 1

8

Opt. Splitter 2

11

12

a

c

e

10

5

Fig.1

Fig.1a

Fig.1b

Fig.1c

Fig.2a

Fig.2b

Fig.2c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6829397 B2
- US 20100326200 A1
- FR 2962217 A1
- JP 2010112867 A